# EUROPÄISCHE PATENTSCHRIFT

(11) **EP 4 313 877 B1**
(45) Veröffentlichungstag und Bekanntmachung des Hinweises auf die Patenterteilung: **04.09.2024**
(21) Anmeldenummer: 22733572.6
(22) Anmeldetag: 08.06.2022
(51) Int. Cl.: C02F 1/461, C01B 13/02, C02F 1/72, C02F 101/16

(54) **PHOTOSENSIBLES PARTIKEL UND DESSEN HERSTELLUNG, SAUERSTOFF- ERZEUGUNGSEINHEIT UND VERWENDUNGEN EINER SOLCHEN**
PHOTOSENSITIVE PARTICLE AND ITS PRODUCTION, OXYGEN-GENERATING UNIT AND USES OF SAME
PARTICULE PHOTOSENSIBLE ET SA PRODUCTION, UNITÉ DE GÉNÉRATION D'OXYGÈNE ET SES UTILISATIONS

(30) Priorität: 08.06.2021 DE 102021114704
(43) Veröffentlichungstag der Anmeldung: 07.02.2024
(73) Patentinhaber: Jassen - Kunststoffzentrum GmbH - Apparatebau, Zuschnitte und Formung, 79585 Steinen (DE)
(72) Erfinder: ILLENBERGER, Marco, 79110 Freiburg (DE); ILLENBERGER, Bernhard, 79585 Steinen (DE); JASSEN, Hartmut, 79585 Steinen (DE)
(74) Vertreter: Mertzlufft-Paufler, Cornelius
(86) Internationale Anmeldenummer: PCT/EP2022/065579
(87) Internationale Veröffentlichungsnummer: WO 2022/258700

(56) Entgegenhaltungen:
- EP-B1- 1 115 652
- JP-A- 2004 189 632
- JP-A- 2012 096 947
- US-A1- 2004 058 101
- US-A1- 2005 013 750

## Beschreibung

Die Erfindung betrifft ein photosensibles Partikel, ein Verfahren zur Herstellung solcher photosensiblen Partikel, eine Sauerstoff-Erzeugungseinheit und Verwendungen einer solchen Sauerstoff-Erzeugungseinheit.

Bei vielen Anwendungen wird in der Praxis Sauerstoff benötigt. Dieser kann in Form molekularen Sauerstoffs im gasförmigen oder im in Wasser gelöstem Zustand bereitgestellt werden. Alternativ ist Sauerstoff in Form von Wasser H2O oder in konzentrierter Form von Wasserstoffperoxid (H2O2) an Wasserstoff gebunden. Die Herstellung von Sauerstoff ist energieaufwändig und umweltschädigend.

Der Erfindung liegt die Aufgabe zugrunde, auf umweltschonende, nachhaltige Weise Sauerstoff bereitzustellen.

Zur Lösung dieser Aufgabe schlägt die Erfindung photosensible Partikel gemäß der Merkmale von Anspruch 1 vor. Insbesondere wird somit erfindungsgemäß bei einem photosensiblen Partikel vorgeschlagen, dass dieses ein Trägerelement aufweist, auf dem ein Material mittels eines Haftmittels anhaftet, wobei das Material lichtaktive Farbstoffmoleküle enthält.

Das Material umfasst bevorzugt eine nicht lebende, insbesondere tote, organische Substanz. Besonders bevorzugt umfasst das Material einen Humusbestandteil und/oder ein Tonmineral. Ganz besonders bevorzugt weist das Material Pflanzenblattpolymere auf. Diese können aus Pflanzenblattmaterial bereitgestellt werden. Es hat sich gezeigt, dass sich die Planzenblattpolymere von abgestorbenen und abgestoßenen Herbstblättern hervorragend eignen.

Die lichtaktiven Farbstoffmoleküle können durch entsprechende Lichteinstrahlung angeregt werden. Dies kann dazu führen, dass Elektronen und Protonen auf Nachbarmoleküle übertragen werden. Handelt es sich bei dem Nachbarmolekül um molekularen Sauerstoff kann dies dazu führen, dass Wasserstoffperoxid gebildet wird. Sind die Farbstoffmoleküle in einem Huminstoff-Tonmineralkomplex eingebunden, können Radikale erzeugt werden. Beispielsweise kann ein als Hyperoxid-Anion erzeugtes Radikal einen Protonentransfer auf ein Übergangsmetall wie etwa Eisen oder Kupfer, die in dem Huminstoff-Tonmineralkomplex eingebunden sind, auslösen, wodurch molekularer Sauerstoff aus dem Huminstoff-Tonmineralkomplex abgespalten werden kann, der sodann zu Wasserstoffperoxid umgewandelt werden kann. Im Ergebnis kann so mit Hilfe der photosensiblen Partikel und der nachfolgend noch genauer beschriebenen Sauerstoff-Erzeugungseinheit Wasserstoffperoxid und molekularer Sauerstoff erzeugt werden, der in Wasser gelöst sein kann. Mit den photosensiblen Partikeln kann daher auf umweltschonende, nachhaltige Weise Sauerstoff bereitgestellt werden.

Die Nachhaltigkeit kann weiter verbessert werden, wenn in vorteilhafter Ausgestaltung des photosensiblen Partikels vorgesehen ist, dass die lichtaktiven Farbstoffmoleküle im Spektrum des Sonnenlichts, vorzugsweise im sichtbaren Bereich des Spektrums des Sonnenlichts, sensitiv sind. Sensitiv sind Farbstoffmoleküle für Licht einer bestimmten Wellenlänge, wenn sie die Energie des Lichts dieser Wellenlänge aufnehmen können, indem diese beispielsweise angeregt werden. Anschließend kann die aufgenommene Energie in anderer Form wieder abgegeben werden. Beispielsweise weisen Pflanzenfarbstoffe konjugierte Doppelbindungen auf, also alternierende Doppel- und Einfachbindungen, deren pi-Elektronen durch Licht angeregt werden können. Es kann eine entsprechende künstliche Lichtquelle ausgebildet sein. Alternativ kann jedoch auch die Sonne als Lichtquelle verwendet werden. Diese Eigenschaft erfüllt das zuvor genannte Pflanzenblattmaterial, welches lichtaktive Farbstoffmoleküle im sichtbaren Licht aufweist.

Das Trägerelement hat bevorzugt einen maximalen Durchmesser von 1cm, noch bevorzugter zwischen 100 Mikrometer und 0,5 cm, besonders bevorzugt zwischen 0,5 mm und 3mm, ganz besonders bevorzugt zwischen 1 mm und 2 mm.

Das Trägerelement kann grundsätzlich beliebig geformt sein, bevorzugt ist eine Kugelform.

Bevorzugt ist das Trägerelement aus einem Kunststoff. Bevorzugt ist das Trägerelement ein Mikroplastikpartikel. Das Mikroplastikpartikel kann aus primärem oder sekundärem Plastik gefertigt sein.

Es kann vorgesehen sein, dass das Haftmittel einen Schleimstoff umfasst. Der Schleimstoff enthält bevorzugt ein Polysaccharid. Der Schleimstoff kann ein Mucin sein. Der Schleimstoff kann menschlicher, tierischer oder pflanzlicher Schleim sein. Der Schleimstoff kann auch ein Speichelersatzprodukt wie etwa Hyaluronsäure sein.

Bevorzugt ist vorgesehen, dass das Haftmittel das Trägerelement einhüllt.

Wie bereits zuvor beschrieben, umfasst das Material bevorzugt eine nicht lebende, insbesondere tote, organische Substanz. Das Material kann insbesondere einen Humusbestandteil und/oder ein Tonmineral umfassen. Der Humusbestandteil ist bevorzugt ein Huminstoff. Tonminerale können mit Huminstoffen besonders vorteilhafte Komplexe bilden.

Ein Tonmineral ist bevorzugt ein Mineral mit einer durchschnittlichen Korngröße unterhalb von 5 Mikrometer, bevorzugt unterhalb von 2 Mikrometer.

Humus kann in geeigneten Lagen eine hohe Dichte an lichtaktiven Farbstoffmolekülen aufweisen. Für die Erfindung geeignet sind Lagen, in denen der Humus darüber hinaus einen hohen Anteil an Lignin- und Polyphenolfragmenten und darin integrierte lichtaktive Farbstoffmoleküle aufweist.

Als besonders vorteilhaft erweist sich, wenn das Material Pflanzenblattpolymere aufweist. Eine besonders vorteilhafte Struktur bildet das Pflanzenblattpolymer des gealterten, insbesondere in den Herbstmonaten September und Oktober rückgebaute, abgestoßene und abgestorbene Blatt von Laubbäumen. Besonders vorteilhaft ist das Pflanzenblattpolymer von Pflanzen der Pflanzenfamilie zweikeimblättriger Angiospermen, insbesondere mit einem Celluloseanteil von 15-50%, Hemicelluloseanteil von 3-50% und/oder Ligninanteil von 7-10%. Das Pflanzenblattpolymer des abgestorbenen Blatts von Laubbäumen kann eine hohe Konzentration unterschiedlicher Farbstoffmoleküle aufweisen.

Besonders bevorzugt handelt es sich bei den photosensiblen Partikeln um solche, die durch das nachfolgend beschriebene Verfahren hergestellt werden.

Zur Lösung der genannten Aufgabe sind erfindungsgemäß die Merkmale des auf ein Verfahren zur Herstellung eines photosensiblen Partikels gerichteten nebengeordneten Anspruchs vorgesehen. Insbesondere wird zur Lösung der genannten Aufgabe somit erfindungsgemäß ein Verfahren zur Herstellung eines photosensiblen Partikels vorgeschlagen, bei dem vorgesehen ist, dass auf einem Trägerelement mittels eines Haftmittels ein Material aufgetragen wird, wobei das Material lichtaktive Farbstoffmoleküle enthält. Durch das Haftmittel wird daher eine haftende Verbindung zwischen dem Material und dem Trägerelement hergestellt. Das Auftragen kann beispielsweise dadurch erfolgen, dass das Trägerelement von dem Material umhüllt wird oder dass das Trägerelement in dem Material eingebettet wird. Dies kann beispielsweise durch Vermischen des Materials, des Haftmittels und des Trägerelements erfolgen. Auf diese Weise kann ein photosensibles Partikel hergestellt werden, welches erfindungsgemäß, insbesondere wie zuvor beschrieben und/oder nach einem der auf ein photosensibles Partikel gerichteten Schutzansprüche, ausgebildet ist. Mit diesem Verfahren werden bevorzugt eine Vielzahl derartiger photosensiblen Partikel gleichzeitigt hergestellt. Hierzu können beispielsweise eine Vielzahl von Trägerelemente mit dem Material und dem Haftmittel vermischt werden.

Das Trägerelement, das Haftmittel und das Material können wie zuvor beschrieben ausgebildet sein.

Das Trägerelement kann bevorzugt hergestellt werden, indem Makroplastik, das beispielsweise aus Kunststoffgranulaten, Kunststoffausschussteilen oder Plastikabfall stammen kann, zerkleinert wird, beispielsweise durch Schreddern und/oder mittels einer Kryogenschwingmühle. Hierdurch kann das Trägerelement insbesondere in Partikel zerkleinert werden zu Durchmessern wie sie weiter oben genannt sind.

Ein Schleimstoff als Haftmittel kann hergestellt werden, indem menschlicher, tierischer oder pflanzlicher Schleim entnommen wird oder indem der Schleimstoff chemisch hergestellt wird. Beispielsweise entsteht durch Zugabe von Natriumtetraboratlösung (Na2B4O7) zu einer Polyvinylalkohollösung (C2H4O) ein viskoses Gemisch. Die Kondensationsreaktion führt zu einer Vernetzung der Polyvinylketten und das Stadium der Vernetzung und die Ausbildung der Viskosität lassen sich einstellen und führen zu einem (Borax-)Schleim.

Das Material, welches die lichtaktiven Farbstoffmoleküle enthält, kann beispielsweise erhalten werden, indem nicht lebende, insbesondere tote, organische Substanz isoliert und/oder bereitgestellt wird. Bevorzugt wird Pflanzenblattpolymer, vorzugsweise von Herbstblättern oder von Blättern wie zuvor beschrieben, bereitgestellt. Besonders bevorzugt beträgt dessen Pflanzenfarbstoffanteil mindestens 1% und/oder dessen Lignin-Massenanteil mehr als 1% in Trockensubstanz und/oder dessen Massenanteil von einem Chlorophyllabbauprodukt non-fluorescent chlorophyll catabolites (NCC) zwischen 0,6% bis 1,2% in Trockensubstanz am Gesamtanteil des Pflanzenblattmaterial.

Bevorzugt wird das bereitgestellte Pflanzenblattpolymer getrocknet, vorzugsweise bis ein Wasser-Massenanteil des Pflanzenblattmaterials höchstens 25%, insbesondere höchstens 20%, höchstens 10% oder höchstens 5% erreicht ist.

Bevorzugt wird das getrocknete Pflanzenblattmaterial zerkleinert. Besonders bevorzugt wird das Pflanzenmaterial zu Partikelgrößen zwischen 0,01 mm bis 2mm, insbesondere zwischen 0,1mm bis 1mm, zerkleinert.

Bevorzugt wird das Pflanzenblattmaterial, insbesondere das getrocknete und/oder zerkleinerte Pflanzenblattmaterial, mit Tonmineralen vermischt. Bevorzugt beträgt der Massenanteil des Pflanzblattmaterials zwischen 60% und 99%, der Massenanteil der Tonminerale zwischen 1% und 20% und der Massenanteil von Wasser und/oder der Massenanteil eines weiteren Materials zwischen 0% und 20%. Die Massenanteile beziehen sich auf die Mischung, die einen Massenanteil von 100% hat.

Es kann vorgesehen sein, dass das die lichtaktiven Farbstoffmoleküle enthaltende Material mit dem Haftmittel vermischt wird. Bevorzugt hat das Material einen Massenanteil zwischen 80% und 99%, das Haftmittel einen Massenanteil zwischen 1% und 10%. Ferner kann Wasser zugemischt werden mit einem Massenanteil zwischen 0% und 10%. Insgesamt sind die zuvor genannten Massenanteile jeweils bezogen auf eine Masse des Gemischs, das einen Massenanteil von 100% hat.

Es kann vorgesehen sein, dass dieses Material-Haftmittel-Gemisch sodann mit den Trägerelementen vermischt wird, beispielsweise indem diese dem Material-Haftmittel-Gemisch zugefügt werden und indem sodann das Material-Haftmittel-Gemisch vermischt wird. Hierdurch können die Trägerelemente von dem Haftmittel umhüllt werden. Bevorzugt werden die Viskosität des Haftmittels und/oder das Volumenverhältnis der Trägerelemente zu dem Material-Haftmittel-Gemisch bei dem Vermischen so eingestellt, dass die äußere Oberfläche der Umhüllung höchstens 10%, vorzugsweise höchstens 5%, größer ist als die Oberfläche des umhüllten Trägerelements.

Zur Lösung der genannten Aufgabe sind erfindungsgemäß die Merkmale des auf eine Sauerstoff-Erzeugungseinheit gerichteten nebengeordneten Anspruchs vorgesehen. Insbesondere wird zur Lösung der genannten Aufgabe somit erfindungsgemäß eine Sauerstoff-Erzeugungseinheit vorgeschlagen, bei der vorgesehen ist, dass sie eine Photozelle umfasst, in der eine Vielzahl von photosensiblen Partikeln angeordnet sind, wobei die photosensiblen Partikel jeweils erfindungsgemäß, insbesondere wie zuvor beschrieben und/oder nach einem der auf ein photosensibles Partikel gerichteten Schutzansprüche, ausgebildet sind. Es ist bereits zuvor bechrieben worden, dass mit einer solchen Sauerstoff-Erzeugungseinheit auf umweltfreundliche und nachhaltige Weise verwertbarer Sauerstoff hergestellt werden kann.

Bevorzugt weist die Photozelle einen Hohlkörper mit einer lichtdurchlässigen Wandung auf. Besonders bevorzugt ist die Photozelle, insbesondere die zuvor erwähnte Wandung, im sichtbaren Licht und/oder im Spektrum des Sonnenlichts lichtdurchlässig.

Um die Effektivität der Sauerstofferzeugung zu verbessern, kann vorgesehen sein, dass die photosensiblen Partikel in einer Photozellenflüssigkeit suspendiert sind. Die Photozellenflüssigkeit enthält bevorzugt Wasser, wobei der Wasseranteil auch 100% betragen kann.

Zur Verbesserung der Erzeugung von Sauerstoff kann bei einer Weiterbildung der Sauerstoff-Erzeugungseinheit vorgesehen sein, dass diese einen Sauerstoff-Erzeugungskreislauf für die Photozellenflüssigkeit aufweist, wobei die Photozelle in dem Sauerstoff-Erzeugungskreislauf eingebunden ist. Zirkulierende Photozellenflüssigkeit fließt daher auch durch die Photozelle. Die Photozelle weist daher bevorzugt einen Ein- und einen Auslass für die Photozellenflüssigkeit auf. Eine Pumpe kann in dem Sauerstoff-Erzeugungskreislauf angeordnet sein. Die Pumpe kann den nötigen Antrieb für die Zirkulation der Photozellenflüssigkeit in dem Sauerstoff-Erzeugungskreislauf bewirken. Der Sauerstoff-Erzeugungskreislauf umfasst ferner bevorzugt mindestens eine Leitung, durch die die Photozellenflüssigkeit zirkulieren kann.

Es kann vorgesehen sein, dass die Sauerstoff-Erzeugungseinheit einen an den Sauerstoff-Erzeugungskreislauf angeschlossenen Tank aufweist, mit dem Photozellenflüssigkeit in den Sauerstoff-Erzeugungskreislauf zuführbar ist. Der Tank kann mit Photozellenflüssigkeit, insbesondere mit Wasser, befüllt sein. Alternativ oder zusätzlich kann vorgesehen sein, dass die Sauerstoff-Erzeugungseinheit eine an den Sauerstoff-Erzeugungskreislauf angeschlossene Ausleitung aufweist, über die Photozellenflüssigkeit ausleitbar ist. Die Photozellenflüssigkeit kann beispielsweise über die Ausleitung in einen weiteren Tank geleitet werden oder direkt einem Abnehmer zugeleitet werden. Hierzu kann die Ausleitung an einen entsprechenden Einlass des Abnehmers angeschlossen sein. Der Abnehmer kann beispielsweise der nachfolgend genannte Bioreaktor oder die nachfolgend genannte Vorrichtung zur Umwandlung von Ammoniak aus einer Ammoniak enthaltenden wässrigen Flüssigkeit in molekularen Stickstoff sein. Hierbei handelt es sich jedoch nur um beispielhafte Abnehmer. Die Erfindung ist auf unterschiedlichste Arten von Abnehmern anwendbar.

Die erfindungsgemäße Sauerstoff-Erzeugungseinheit kann daher insbesondere verwendet werden, um Wasserstoffperoxid und/oder von in Wasser gelöstem molekularem Sauerstoff herzustellen. Der so hergestellte Sauerstoff kann in einer Vielzahl von Anwendungen verwendet werden.

Beispielsweise kann vorgesehen sein, dass die Sauerstoff-Erzeugungseinheit verwendet wird, um einen Bioreaktor zur Umwandlung von organischen Rest- und/oder Abfallstoffen in eine organische Nährstofflösung mit in Wasser gelöstem molekularen Sauerstoff zu versorgen. Ein solcher Bioreaktor ist beispielsweise in der Offenlegungsschrift DE 10 2017 131 089 A1 beschrieben und kann insbesondere so ausgebildet sein, wie in den Patentansprüchen der genannten Offenlegungsschrift beschrieben.

Beispielsweise kann alternativ oder zusätzlich vorgesehen sein, dass die Sauerstoff-Erzeugungseinheit verwendet wird, um eine Vorrichtung zur Umwandlung von Ammoniak aus einer Ammoniak enthaltenden wässrigen Flüssigkeit in molekularen Stickstoff mit Wasserstoffperoxid und/oder mit in Wasser gelöstem molekularen Sauerstoff zu versorgen.

Mithilfe des mittels der photosensiblen Partikel und der Sauerstoff-Erzeugungseinheit erzeugten Wasserstoffperoxids und/oder gelösten molekularen Sauerstoffs kann die Effektivität eines Abnehmers erhöht werden wie etwa die Effektivität des zuvor genannten Bioreaktors oder die Umsetzungsrate von Ammoniak zu molekularem Stickstoff in der zuvor erwähnten Vorrichtung zur Umwandlung von Ammoniak aus einer Ammoniak enthaltenden wässrigen Flüssigkeit in molekularen Stickstoff.

Eine solche Vorrichtung kann insbesondere wie nachfolgend beschrieben ausgebildet sein.

Die Vorrichtung zur Umwandlung von Ammoniak aus einer Ammoniak enthaltenden wässrigen Flüssigkeit in molekularen Stickstoff kann Einrichtungen zur Zirkulation der Flüssigkeit in einem Kreislauf, einen Einlass zur Zufügung der Flüssigkeit in den Kreislauf und eine Entnahmeöffnung zur Entnahme der Flüssigkeit aus dem Kreislauf aufweisen. Die Einrichtungen des Kreislaufs können eine Kathodenkammer umfassen, die eine Kathode aufweist. Die Einrichtungen können ferner eine Anodenkammer zur Umwandlung des Ammoniaks in molekularen Stickstoff umfassen, wobei die Anodenkammer eine Anode aufweist. Die Anodenkammer kann eine Zuleitung für die zirkulierende Flüssigkeit haben, wobei die Anodenkammer einen Durchlass für die zirkulierende Flüssigkeit in die Kathodenkammer haben kann und wobei die Kathodenkammer eine Ausleitung für die zirkulierende Flüssigkeit haben kann, die mit der Zuleitung der Anodenkammer über eine Pumpe zum Pumpen der zirkulierenden Flüssigkeit verbunden sein kann. Bei einer solchen Vorrichtung gehören die Anoden- und die Kathodenkammer einem gemeinsamen Kreislauf an. Die Flüssigkeit kann hierbei kontinuierlich und mehrfach durch Anoden- und Kathodenkammer geleitet werden. Dies ermöglicht eine kontinuierliche, umweltschonende und kontrollierte Ammoniakumsetzung auch bei einer niedrigen Ammoniakausgangskonzentration und vor allem zu einer niedrigen finalen Ammoniakzielkonzentration, wobei bei der Ammoniakumsetzung zudem elektrische Energie erzeugt wird.

Eine Ausleitung der Sauerstoff-Erzeugungseinheit, wie beispielsweise die bereits zuvor erwähnte Ausleitung, kann beispielsweise an dem zuvor genannten Einlass angeschlossen sein. Hierdurch hat die Sauerstoff-Erzeugungseinheit eine Zuleitung zu dem Kreislauf der Ammoniak enthaltenden Flüssigkeit, sodass Wasserstoffperoxid und/oder gelöster molekularer Sauerstoff in den Ammoniak enthaltenden Flüssigkeits-Kreislauf einbringbar ist.

Die Anodenkammer der zuvor erwähnten Vorrichtung ist bevorzugt ausgebildet, um im Betrieb Ammoniak in Stickstoff umzuwandeln. Die Kathodenkammer kann ausgebildet sein, um im Betrieb die von der Anode zur Kathode kommenden Elektronen an die Flüssigkeit abzugeben unter chemischer Beteiligung von in der Flüssigkeit befindlichen Protonen, molekularem Sauerstoff und/oder Wasserstoffperoxid, die zu Wassermolekülen umgewandelt werden können. Bevorzugt ist in der Anodenkammer ein Katalysator, wie etwa Manganoxid, zur katalytischen Spaltung von Wasserstoffperoxid, vorzugsweise in molekularen Sauerstoff und Wasser, angeordnet. Bevorzugt ist ein Material der Kathode ein Katalysator zur katalytischen Spaltung von Wasserstoffperoxid in molekularen Sauerstoff und Wasser, wie etwa Mangandioxid. Bevorzugt ist ein Material der Anode Zink.

Die Erfindung wird nun anhand einiger weniger Ausführungsbeispiele näher beschrieben, ist jedoch nicht auf diese wenigen Ausführungsbeispiele beschränkt. Weitere Erfindungsvarianten und Ausführungsbeispiele ergeben sich durch Kombination der Merkmale einzelner oder mehrerer Schutzansprüche untereinander und/oder mit einzelnen oder mehreren Merkmalen der Ausführungsbeispiele und/oder der zuvor beschriebenen Varianten erfindungsgemäßer Vorrichtungen und Verfahren.

Es zeigen:
- Fig. 1: ein Ausführungsbeispiel einer erfindungsgemäß ausgebildeten Sauerstoff-Erzeugungseinheit, die an einen Abnehmer des erzeugten Sauerstoffs angeschlossen ist,
- Fig. 2: ein Ausführungsbeispiel eines erfindungsgemäß ausgebildeten photosensiblen Partikels,
- Fig. 3: den in Fig. 2 gezeigten Abnehmer in Detaildarstellung.

Bei der nachfolgenden Beschreibung verschiedener Ausführungsbeispiele der Erfindung erhalten in ihrer Funktion übereinstimmende Elemente auch bei abweichender Gestaltung oder Formgebung übereinstimmende Bezugszahlen.

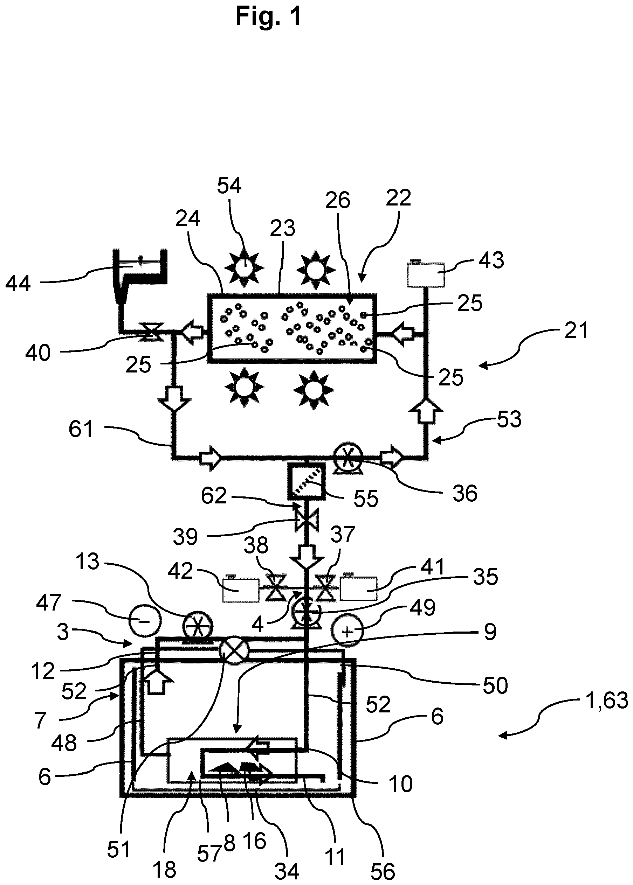

Die in Fig. 1 gezeigte Sauerstoff-Erzeugungseinheit 21 hat eine Photozelle 22 mit einem Hohlkörper 23, der eine für Licht im Spektrum des Sonnenlichts lichtdurchlässige Wandung 24 hat. In dem Hohlkörper 23 sind eine Vielzahl von photosensiblen Partikeln 25 angeordnet.

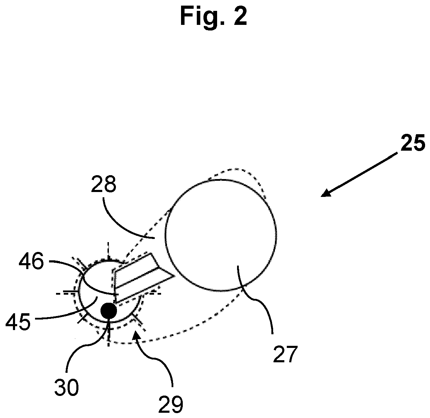

Ein solches photosensibles Partikel 25 ist in Fig. 2 gezeigt. Das Partikel 25 hat ein Trägerelement 27, das ein Mikroplastikpartikel sein kann. Das Trägerelement 27 ist von einem von einem einen Schleimstoff umfassenden Haftmittel 28 umgeben, in dem ein Material 29 eingebettet ist, das lichtaktive Farbstoffmoleküle 30 enthält. Die lichtaktiven Farbstoffmoleküle 30 sind in dem in Fig. 2 gezeigten Ausführungsbeispiel in einem Komplex aus Huminstoff 45 und Tonmineral 46 eingebettet. In der Abbildung ist lediglich ein einzelner Komplex 45, 46 und ein lichtaktives Farbstoffmolekül 30 stark vergrößert und schematisch explizit gezeichnet. In Wirklichkeit sind eine sehr große Anzahl von Huminstoffmolekülen, Tonmineralteilchen und Farbstoffmolekülen 30 vorhanden. Ist ein solches photosensibles Partikel 25 in einer Photozellenflüssigkeit 26, bei der es sich um Wasser handeln kann, suspendiert, kann eine Anregung der lichtaktiven Farbstoffmoleküle 30 dazu führen, dass sich Radikale bilden, die Sauerstoff aus dem Huminstoff-Tonmineralkomplex herauslösen. Ferner kann die Anregung der Farbstoffmoleküle 30 dazu führen, dass der herausgelöste Sauerstoff in Wasserstoffperoxid umgewandelt wird oder dass molekularer Sauerstoff in der Photozellenflüssigkeit 26 gelöst wird. Diese Vorgänge sind weiter oben ausführlicher beschrieben.

Die Photozelle 22 ist in einen Sauerstoff-Erzeugungskreislauf 53 integriert. Die Photozellenflüssigkeit 26 kann mittels einer Pumpe 36 und einem einen Kreislauf bildenden und wenigstens eine Leitung 61 aufweisenden Leitungssystem in eine Zirkulation versetzt werden. Mit Wasserstoffperoxid und/oder molekularem Sauerstoff angereicherter Photozellenflüssigkeit 26 kann über die an dem Sauerstoff-Erzeugungskreislauf 53 angeschlossene Ausleitung 62, den Filter 55 und das Ventil 39 aus dem Sauerstoff-Erzeugungskreislauf 53 ausgeleitet werden.

Die infolge des Ausleitens in dem Sauerstoff-Erzeugungskreislauf 53 fehlende Photozellenflüssigkeit 26 kann ersetzt werden mittels eine über ein Ventil 40 angeschlossenen Tanks 44, der mit Photozellenflüssigkeit 26, vorzugsweise mit Wasser, befüllt ist. Überschüssige, mit Wasserstoffperoxid und mit Sauerstoff angereicherte Photozellenflüssigkeit 26 kann alternativ auch in einen Tank 43 für eine spätere Verwendung geleitet und dort zwischengelagert werden. Als Lichtquelle 54 kann Sonnenlicht verwendet werden. Alternativ kann auch eine künstliche Lichtquelle 54 verwendet werden, die Licht in einem für die Photozelle 22 geeigneten Wellenlängenbereich erzeugt.

Weitere Varianten der Sauerstoff-Erzeugungseinheit 21 und der photosensiblen Partikel 25 sowie Verfahren zur Herstellung der photosensiblen Partikel 25 sind oben ausführlich beschrieben worden.

Die in Fig. 2 dargestellte Sauerstoff-Erzeugungseinheit 21 ist an einem Abnehmer 63 angeschlossen. Hierzu ist die Ausleitung 62 der Sauerstoff-Erzeugungseinheit 21 an einem Einlass 4 des Abnehmers 63 angeschlossen.

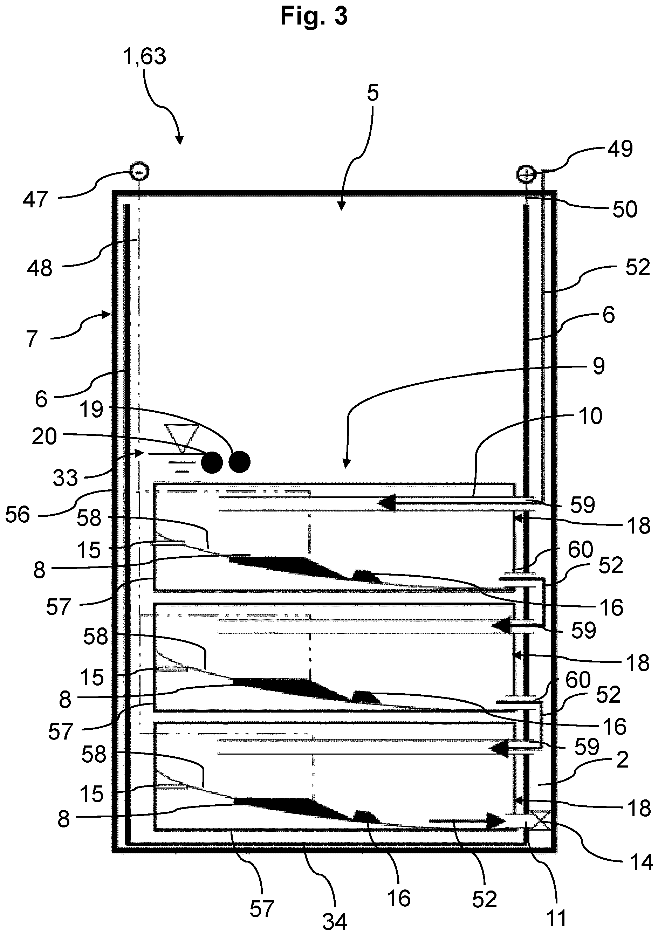

Der Abnehmer 63 kann auf unterschiedlichste Weise ausgebildet sein. Zwei der vielen Möglichkeiten sind zuvor bereits beschrieben worden. In Fig. 1 ist einer dieser Anwendungsfälle dargestellt, bei dem der Abnehmer 63 als eine Vorrichtung 1 zur Umwandlung von Ammoniak aus einer Ammoniak enthaltenden wässrigen Flüssigkeit in molekularen Stickstoff ausgebildet ist. Diese Vorrichtung 1 ist in Fig. 3 genauer dargestellt, wo insbesondere gezeigt ist, dass in der Kathodenkammer 7 insgesamt drei seriell aneinander angeschlossene Anodenkammermodule 18 angeordnet sind. In Fig. 1 ist abstrahierend nur eine der drei Anodenkammermodule 18 gezeigt, wobei auch nur ein solches Anodenkammermodul 18 ausreichen kann. Der Abnehmer 63 wird im Folgenden genauer beschrieben.

Bei der wässrigen Flüssigkeit kann es sich um eine Reststoffflüssigkeit handeln, wie etwa ein Gärprodukt aus einer Biogasanlage, dessen Feststoffbestandteile weitgehend abgeschieden worden sind.

Die Vorrichtung 1 umfasst eine Kathodenkammer 7. Die Kathodenkammer 7 weist ein Behältnis 56 mit undurchlässiger Wandung auf. Das Behältnis 56 kann oberseitig mit einem abnehmbaren Deckel versehen sein, sodass oberseitig eine Entnahmeöffnung 5 zur Entnahme von in dem Behältnis 56 befindlicher Flüssigkeit 2 ausgebildet sein kann.

Die Entnahmeöffnung 5 kann auch an dem Behältnis 56 ausgebildet sein, indem dieses einen Abfluss hat, welcher mit einem Ventil verschließbar sein kann.

In der Kathodenkammer 7 ist auf beiden Seiten des Behältnisses 56 jeweils eine Kathode 6 mit Mangandioxid als Kathodenmaterial angeordnet. Die Kathoden 6 sind über eine elektrische Verbindung 34 elektrisch miteinander verbunden.

Innerhalb der Kathodenkammer 7, insbesondere innerhalb des Behältnisses 56 der Kathodenkammer 7, ist die Anodenkammer 9 angeordnet. Die Anodenkammer 9 weist mehrere Anodenkammermodule 18 auf, welche miteinander in Reihe geschaltet sind. Die Anodenkammermodule 18 haben jeweils ein Behältnis 57 mit undurchlässiger Wandung. Für die Reihenschaltung hat jedes Anodenkammermodul 18, und insbesondere jedes Behältnis 57, einen Einlass 59 und eine Ausleitung 60. Die Ausleitung 60 ist mit dem Einlass 59 des jeweils nächsten Anodenkammermoduls 18 über einen Leitung verbunden.

Eine Zuleitung 10 ist an einen Einlass 59 des ersten Anodenkammermoduls 18 angeschlossen, sodass Flüssigkeit 2 in die Anodenkammer 9 geleitet werden kann. Die Ausleitung 60 des letzten Anodenkammermoduls 18 bildet einen Durchlass 11 in die Kathodenkammer 7. Flüssigkeit 2, die über die Zuleitung 10 in die Anodenkammer 9 geleitet wird, passiert daher hintereinander die einzelnen Anodenkammermodule 18 und tritt am Durchlass 11 der Anodenkammer 9 in die Kathodenkammer 7 ein.

Die Kathodenkammer 7 ist bis zu einem Füllstand 33 mit der Flüssigkeit 2 befüllt. Die Kathodenkammer 7 hat eine Ausleitung 12, über die die von der Anodenkammer 9 in die Kathodenkammer 7 eingeleitete Flüssigkeit wieder ausgeleitet werden kann.

Die Ausleitung 12 ist über eine Pumpe 13 mit dem Zugang 10 der Anodenkammer 9 leitungsverbunden, sodass die Flüssigkeit 2 in einem Kreislauf 3 zirkulieren kann. Ein sich ausbildender Flüssigkeitsstrom 52 ist in den Zeichnungen eingezeichnet. Die Pfeile zeigen die Strömungsrichtung an. Die Pumpe 13 pumpt die Flüssigkeit 2 aus der Kathodenkammer 7 heraus und in die Anodenkammer 9 hinein. Die Flüssigkeit 2 strömt durch den Durchlass 11 wieder in die Kathodenkammer 7, wo sie erneut von der Pumpe 13 in die Anodenkammer 9 gepumpt wird. Bei geöffnetem Ventil 14 am Durchlass 11 entsteht so ein Flüssigkeitskreislauf, bei dem die Flüssigkeit 2 die Vorrichtung 1 mehrfach durchläuft.

In jedem der Anodenkammermodule 18 ist jeweils eine Anode 8 angeordnet. Als Anodenmaterial ist Zink vorgesehen. Streicht die Ammoniak enthaltende Flüssigkeit 2 an den Anoden 8 entlang, reagiert das Ammoniak mit Hydroxidionen und bildet Wasser und molekularen Stickstoff. Außerdem werden Elektronen freigesetzt, die zu der Kathode 6 wandern, welche mit den elektrisch parallelgeschalteten Anoden 8 über elektrische Leitungen 48, 50 miteinander elektrisch verbunden sind. An der Kathode 6 können die Elektronen sodann mit in der Flüssigkeit 2 gelöstem molekularen Sauerstoff reagieren und durch die Aufnahme von freien Protonen kann Wasser gebildet werden.

Die Reaktionen an den Anoden 8 und Kathoden 6 führen somit zu einer Potenzialdifferenz zwischen Anode 8 und Kathode 6, sodass elektrische Energie erzeugt werden kann. Mit der erzeugten elektrischen Energie kann ein Verbraucher 51 mit elektrischer Energie versorgt werden. Die Anode 8 bildet hierbei den Minuspol 47, während die Kathode den Pluspol 49 bildet.

In der Kathodenkammer 7 sind Messsensoren 19, 20 angeordnet, die in die Flüssigkeit 2 eintauchen. Der Messsensor 19 kann beispielsweise ein Messsensor 19 sein, mit dem eine Sauerstoffkonzentration in der Flüssigkeit 2 gemessen werden kann. Der Messsensor 20 kann beispielsweise ein Messsensor 20 sein, mit dem eine Ammoniakkonzentration in der Flüssigkeit 2 gemessen werden kann.

Die Anodenkammermodule 18, insbesondere deren Behältnisse 57, haben dem Zugang 10 und dem Durchfluss 11 gegenüberliegend jeweils einen Auslass 15. Die Auslässe 15 sind so dimensioniert, insbesondere so schmal dimensioniert, dass im regulären Betrieb die durch den Durchlass 11 in die Kathodenkammer 7 fließende Flüssigkeitsmenge um ein Vielfaches größer ist als die gesamte Menge an Flüssigkeit 2, die durch sämtliche Auslässe 15 in die Kathodenkammer 7 fließt. Der Auslass 15 ist in einem Anodenbehältnis 57 weiter oben angeordnet als die jeweilige Ausleitung 60. Die Auslässe 15 sind unmittelbar an der Kathode 6 angeordnet, sodass Wasserstoffperoxid oder molekularer Sauerstoff, der durch einen Auslass 15 strömt, unmittelbar und direkt an die Kathode 6 gelangen kann.

Die Auslässe 15 sind vor allem bei der Initialisierung der Vorrichtung 1 wichtig. Die Vorrichtung 1 hat einen Einlass 4, mit dem die Flüssigkeit 2 in den Kreislauf 3 zugefügt werden kann. Ein Tank 41 ist mit der Flüssigkeit 2 befüllt, die eine Ammoniakausgangskonzentration von beispielsweise 800mg je Liter aufweist. Der Tank 41 ist mit dem Einlass 4 leitungsverbunden, wobei die Zuleitung durch ein Ventil 37 verschließbar ist. Für die Initialisierung der Vorrichtung 1 wird bei geöffnetem Ventil 37 die Kathodenkammer 7 bis zu dem Füllstand 33 befüllt. Sodann wird das Ventil 37 geschlossen.

Ein mit Wasserstoffperoxid befüllter Tank 42 kann behelfsweise neben der Sauerstoff-Erzeugungsvorrichtung 21 zur Versorgung des Abnehmers 63 mit Wasserstoffperoxid vorgesehen sein. Der Tank 42 ist mit dem Einlass 4 über ein Ventil 38 leitungsverbunden, welches zur Versorgung des Abnehmers 63 alternativ zum Ventil 39 betätigt werden kann, wobei über das Ventil 39 mit Wasserstoffperoxid angereicherte Photozellenflüssigkeit 26 aus der Sauerstoff-Erzeugungseinheit 21 in den Kreislauf 3 der Vorrichtung 1 eingeleitet werden kann. Das Ventil 39 bzw. 38 ist zunächst geschlossen. Nach Befüllen der Kathodenkammer 7 mit der Flüssigkeit 2 werden das Ventil 14 geschlossen und das Ventil 39 bzw. 38 geöffnet, sodass mittels eingeschalteter Pumpe 35 Wasserstoffperoxid über den Einlass 4 und die Zuleitung 10 zunächst in das erste Anodenkammermodul 18 der Anodenkammer 9 fließt. In jedem Anodenkammermodul 18 befindet sich auf einem schrägen Zwischenboden 58 eine Kontaktfläche eines Katalysators 16 aus Mangandioxid. Das Wasserstoffperoxid wird durch das Mangandioxid katalytisch in molekularen Sauerstoff umgewandelt. Dabei vergrößert sich das Volumen sehr stark, da Wasserstoffperoxid flüssig ist und molekularer Sauerstoff gasförmig ist. Der Druck in dem Anodenkammermodul 18 steigt und der Sauerstoff wird aus dem Auslass 15 herausgedrückt und an die Kathode 6 geleitet. Hierbei kann auch Wasserstoffperoxid mitgerissen werden und gelangt auf diesem Weg über den Auslass 15 direkt an die Kathode 6. Der Sauerstoffgehalt in der Flüssigkeit 2 kann mit dem Sauerstoffkonzentrationsmesssensor 19 gemessen werden. Sobald eine gewünschte Konzentration erreicht ist. Ist diese Konzentration erreicht, ist die Initialisierungsphase abgeschlossen und die Vorrichtung 1 kann im regulären Betriebsmodus betrieben werden.

Im regulären Betriebsmodus sind oder werden die Ventile 37, 38, 39 geschlossen, das Ventil 14 wird geöffnet. Die Pumpe 13 wird aktiviert, sodass die Flüssigkeit 2 beginnt, einen Flüssigkeitsstrom 52 auszubilden und durch die Vorrichtung 1 in dem Kreislauf 3 zu zirkulieren. Die Reaktionen an Anode 8 und Kathode 6 setzen ein. Die hohe initiale Sauerstoffkonzentration an der Kathode 6 und die Sauerstoffrezyklierung aufgrund des verwendeten Mangandioxids als Kathodenmaterial führen dazu, dass die Ammoniakumsetzungsrate schnell einen hohen Betriebswert erreicht. Der gebildete molekulare Stickstoff kann beispielsweise durch eine Entlüftungsmöglichkeit nach oben in der Kathodenkammer 7 in die Atmosphäre entweichen oder anderweitig aufgefangen werden.

Im regulären Betrieb kann die Sauerstoffkonzentration mittels des Sensors 19 überprüft werden. Sinkt diese unter einen kritischen Wert, kann das Ventil 39 bzw. 38 geöffnet werden, sodass Wasserstoffperoxid und ggf. gelöster molekularer Sauerstoff der weiter zirkulierenden Flüssigkeit 2 über den Einlass 4 zugefügt wird.

Die Erfindung betrifft ein photosensibles Partikel 25 mit einem Trägerelement 27, auf dem ein Material 29 mittels eines Haftmittels 28 anhaftet, wobei das Material 29 lichtaktive Farbstoffmoleküle 30 enthält. Eine Vielzahl solcher photosensiblen Partikel 25 können in einer Photozelle 22 einer Sauerstoff-Erzeugungseinheit 21 angeordnet sein.

### Bezugszeichenliste

- 1: Vorrichtung
- 2: Flüssigkeit
- 3: Kreislauf
- 4: Einlass
- 5: Entnahmeöffnung
- 6: Kathode
- 7: Kathodenkammer
- 8: Anode
- 9: Anodenkammer
- 10: Zuleitung
- 11: Durchlass
- 12: Ausleitung
- 13: Pumpe
- 14: Ventil
- 15: Auslass
- 16: Katalysator
- 18: Anodenkammermodul
- 19: Messsensor
- 20: Messensor
- 21: Sauerstoff-Erzeugungseinheit
- 22: Photozelle
- 23: Hohlkörper
- 24: Wandung
- 25: photosensibles Partikel
- 26: Photozellenflüssigkeit
- 27: Trägerelement
- 28: Haftmittel
- 29: Material
- 30: lichtaktive Farbstoffmoleküle
- 33: Füllstand
- 34: elektrische Verbindung
- 35: Pumpe
- 36: Pumpe
- 37: Ventil
- 38: Ventil
- 39: Ventil
- 40: Ventil
- 41: Tank
- 42: Tank
- 43: Tank
- 44: Tank
- 45: Huminstoff
- 46: Tonmineral
- 47: Minuspol
- 48: elektrische Leitung
- 49: Pluspol
- 50: elektrische Leitung
- 51: Verbraucher
- 52: Flüssigkeitsstrom in 3
- 53: Sauerstoff-Erzeugungskreislauf
- 54: Lichtquelle
- 55: Filter
- 56: Behältnis von 7
- 57: Behältnis von 18
- 58: Zwischenboden in 57
- 59: Einlass von 18
- 60: Ausleitung von 18
- 61: Leitung
- 62: Ausleitung
- 63: Abnehmer

## Patentansprüche

1. Photosensibles Partikel (25), das ein Trägerelement (27) aufweist, auf dem ein Material (29) mittels eines Haftmittels (28) anhaftet, wobei das Material (29) lichtaktive Farbstoffmoleküle (30) enthält.

2. Photosensibles Partikel (25) nach dem vorangehenden Anspruch, **dadurch gekennzeichnet, dass** das Material (29) eine nicht lebende, insbesondere tote, organische Substanz (45, 46) umfasst, insbesondere wobei das Material (29) einen Humusbestandteil (45) und/oder ein Tonmineral (46) umfasst.

3. Photosensibles Partikel (25) nach einem der vorangehenden Ansprüche, **dadurch gekennzeichnet, dass** das Material (29) Pflanzenblattpolymere aufweist und/oder dass die lichtaktiven Farbstoffmoleküle (30) im Spektrum des Sonnenlichts, vorzugsweise im sichtbaren Bereich des Spektrums des Sonnenlichts, sensitiv sind.

4. Photosensibles Partikel (25) nach einem der vorangehenden Ansprüche, **dadurch gekennzeichnet, dass** das Trägerelement (27) einen maximalen Durchmesser von 1cm, vorzugsweise zwischen 0,1mm und 5mm, hat und/oder dass das Trägerelement (27) aus einem Kunststoff ist, insbesondere wobei das Trägerelement (27) ein Mikroplastikpartikel ist.

5. Photosensibles Partikel (25) nach einem der vorangehenden Ansprüche, **dadurch gekennzeichnet, dass** das Haftmittel (28) einen Schleimstoff umfasst und/oder dass das Haftmittel (28) das Trägerelement (27) einhüllt.

6. Sauerstoff-Erzeugungseinheit (21), welche eine Photozelle (22) umfasst, in der eine Vielzahl von photosensiblen Partikeln (25) nach einem der vorangehenden Ansprüche angeordnet sind.

7. Sauerstoff-Erzeugungseinheit (21) nach dem vorangehenden Anspruch, **dadurch gekennzeichnet, dass** die Photozelle (22) einen Hohlkörper (23) mit einer lichtdurchlässigen Wandung (24) aufweist und/oder dass die photosensiblen Partikel (25) in einer Wasser enthaltenden Photozellenflüssigkeit (26) suspendiert sind.

8. Sauerstoff-Erzeugungseinheit (21) nach dem vorangehenden Anspruch, **dadurch gekennzeichnet, dass** die Sauerstoff-Erzeugungseinheit (21) einen Sauerstoff-Erzeugungskreislauf (53) für die Photozellenflüssigkeit (26) aufweist, wobei die Photozelle (22) in dem Sauerstoff-Erzeugungskreislauf (53) eingebunden ist, insbesondere wobei die Sauerstoff-Erzeugungseinheit (21) einen an den Sauerstoff-Erzeugungskreislauf (53) angeschlossenen Tank (44) aufweist, mit dem Photozellenflüssigkeit (26) in den Sauerstoff-Erzeugungskreislauf (53) zuführbar ist, und/oder wobei die Sauerstoff-Erzeugungseinheit (21) eine an den Sauerstoff-Erzeugungskreislauf (53) angeschlossene Ausleitung (62) aufweist, über die Photozellenflüssigkeit (26) ausleitbar ist.

9. Verfahren zur Herstellung eines photosensiblen Partikels (25) nach einem der Ansprüche 1 bis 5, wobei auf dem Trägerelement (27) mittels des Haftmittels (28) das die lichtaktiven Farbstoffmoleküle (3) enthaltende Material (29) aufgetragen wird.

10. Verfahren nach dem vorangehenden Verfahrensanspruch, **dadurch gekennzeichnet, dass** das Trägerelement (27) hergestellt wird, indem Makroplastik zerkleinert wird und/oder dass als Haftmittel (28) ein Schleimstoff verwendet wird, der hergestellt wird, indem menschlicher, tierischer oder pflanzlicher Schleim entnommen wird oder indem der Schleimstoff chemisch hergestellt wird.

11. Verfahren nach einem der vorangehenden Verfahrensansprüche, **dadurch gekennzeichnet, dass** das Material (29), welches die lichtaktiven Farbstoffmoleküle (30) enthält, erhalten wird, indem nicht lebende, insbesondere tote, organische Substanz isoliert und/oder bereitgestellt wird.

12. Verfahren nach dem vorangehenden Verfahrensanspruch, **dadurch gekennzeichnet, dass** zur Bereitstellung der Substanz Pflanzenblattpolymer enthaltendes Pflanzenblattmaterial bereitgestellt wird, insbesondere wobei dessen Pflanzenfarbstoffanteil mindestens 1% und/oder dessen Lignin-Massenanteil mehr als 1% in Trockensubstanz und/oder dessen Massenanteil von einem Chlorophyllabbauprodukt non-fluorescent chlorophyll catabolites (NCC) zwischen 0,6% bis 1,2% in Trockensubstanz am Gesamtanteil des Pflanzenblattmaterial beträgt.

13. Verfahren nach dem vorangehenden Verfahrensanspruch, **dadurch gekennzeichnet, dass** das Pflanzenblattmaterial, vorzugsweise bis ein Wasser-Massenanteil des Pflanzenblattmaterials von höchstens 25% erreicht ist, getrocknet wird, insbesondere wobei das getrocknete Pflanzenblattmaterial anschließend zerkleinert wird, und/oder dass das Pflanzenblattmaterial mit Tonmineralen vermischt wird, insbesondere wobei der Massenanteil des Pflanzenblattmaterials zwischen 60% und 99%, der Massenanteil der Tonminerale zwischen 1% und 20% und der Massenanteil von Wasser und/oder der Massenanteil eines weiteren Materials zwischen 0% und 20% beträgt.

14. Verfahren nach einem der vorangehenden Verfahrensansprüche, **dadurch gekennzeichnet, dass** das die lichtaktiven Farbstoffmoleküle (30) enthaltende Material (29) mit dem Haftmittel (28) zu einem Material-Haftmittel-Gemisch, vorzugsweise unter Zumischung von Wasser, vermischt werden, insbesondere wobei das Material einen Massenanteil zwischen 80% und 99%, das Haftmittel einen Massenanteil zwischen 1% und 10% und das Wasser einen Massenanteil zwischen 0% und 10% haben.

15. Verfahren nach dem vorangehenden Verfahrensanspruch, **dadurch gekennzeichnet, dass** das Material-Haftmittel-Gemisch mit den Trägerelementen (27) vermischt wird, sodass die Trägerelemente (27) von dem Haftmittel (28) umhüllt werden, insbesondere wobei die Viskosität des Haftmittels (28) und/oder das Volumenverhältnis der Trägerelemente (27) zu dem Material-Haftmittel-Gemisch bei dem Vermischen so eingestellt werden, dass die äußere Oberfläche der Umhüllung höchstens 10%, vorzugsweise höchstens 5%, größer ist als die Oberfläche des umhüllten Trägerelements (27).

16. Verwendung einer Sauerstoff-Erzeugungseinheit (21) nach einem der Ansprüche 6 bis 8 zur Herstellung von Wasserstoffperoxid und/oder von in Wasser gelöstem molekularem Sauerstoff, insbesondere wobei eine Vorrichtung (1) zur Umwandlung von Ammoniak aus einer Ammoniak enthaltenden wässrigen Flüssigkeit in molekularen Stickstoff und/oder ein Bioreaktor zur Umwandlung von organischen Rest- und/oder Abfallstoffen in eine organische Nährstofflösung mit Wasserstoffperoxid und/oder mit in Wasser gelöstem molekularen Sauerstoff versorgt werden.

## Claims

1. Photosensitive particle (25) which has a carrier element (27) to which a material (29) adheres by means of an adhesive (28), wherein the material (29) contains light-active dye molecules (30).

2. Photosensitive particle (25) according to the preceding claim, **characterized in that** the material (29) comprises a non-living, in particular dead, organic substance (45, 46), in particular wherein the material (29) comprises a humus component (45) and/or a clay mineral (46).

3. Photosensitive particle (25) according to one of the preceding claims, **characterized in that** the material (29) comprises plant leaf polymers and/or **in that** the light-active dye molecules (30) are sensitive in the spectrum of sunlight, preferably in the visible range of the spectrum of sunlight.

4. Photosensitive particle (25) according to one of the preceding claims, **characterized in that** the carrier element (27) has a maximum diameter of 1 cm, preferably between 0.1 mm and 5 mm, and/or **in that** the carrier element (27) is made of a plastic, in particular wherein the carrier element (27) is a microplastic particle.

5. Photosensitive particle (25) according to one of the preceding claims, **characterized in that** the adhesive (28) comprises a mucilage and/or **in that** the adhesive (28) envelops the carrier element (27).

6. Oxygen-generating unit (21) comprising a photocell (22) in which a plurality of photosensitive particles (25) according to one of the preceding claims are arranged.

7. Oxygen-generating unit (21) according to the preceding claim, **characterized in that** the photocell (22) has a hollow body (23) with a translucent wall (24) and/or **in that** the photosensitive particles (25) are suspended in a photocell liquid (26) containing water.

8. Oxygen-generating unit (21) according to the preceding claim, **characterized in that** the oxygen-generating unit (21) comprises an oxygen-generating circuit (53) for the photocell liquid (26), wherein the photocell (22) is incorporated in the oxygen-generating circuit (53), in particular wherein the oxygen-generating unit (21) has a tank (44) connected to the oxygen-generating circuit (53), with which photocell liquid (26) can be fed into the oxygen-generating circuit (53), and/or wherein the oxygen-generating unit (21) has an outlet (62) connected to the oxygen-generating circuit (53), via which outlet photocell liquid (26) can be discharged.

9. Method for producing a photosensitive particle (25) according to one of claims 1 to 5, wherein the material (29) containing the light-active dye molecules (3) is applied to the carrier element (27) by means of the adhesive (28).

10. Method according to the preceding method claim, **characterized in that** the carrier element (27) is produced by comminuting macroplastic and/or **in that** a mucilage is used as the adhesive (28), which is produced by extracting human, animal or vegetable mucilage or by chemically producing the mucilage.

11. Method according to one of the preceding method claims, **characterized in that** the material (29) containing the light-active dye molecules (30) is obtained by isolating and/or providing non-living, in particular dead, organic substance.

12. Method according to the preceding method claim, **characterized in that** plant leaf material containing plant leaf polymer is provided for the provision of the substance, in particular wherein its plant dye content is at least 1% and/or its lignin mass fraction is more than 1% in dry matter and/or its mass fraction of a chlorophyll degradation product non-fluorescent chlorophyll catabolites (NCC) is between 0.6% and 1.2% in dry matter of the total content of the plant leaf material.

13. Method according to the preceding method claim, **characterized in that** the plant leaf material is dried, preferably until a water mass fraction of the plant leaf material of at most 25% is reached, in particular wherein the dried plant leaf material is subsequently comminuted, and/or **in that** the plant leaf material is mixed with clay minerals, in particular wherein the mass fraction of the plant leaf material is between 60% and 99%, the mass fraction of the clay minerals is between 1% and 20% and the mass fraction of water and/or the mass fraction of a further material is between 0% and 20%.

14. Method according to one of the preceding method claims, **characterized in that** the material (29) containing the light-active dye molecules (30) is mixed with the adhesive (28) to form a material-adhesive mixture, preferably with admixture of water, in particular wherein the material has a mass fraction of between 80% and 99%, the adhesive has a mass fraction of between 1% and 10% and the water has a mass fraction of between 0% and 10%.

15. Method according to the preceding method claim, **characterized in that** the material-adhesive mixture is mixed with the carrier elements (27) so that the carrier elements (27) are coated with the adhesive (28), in particular wherein the viscosity of the adhesive (28) and/or the volume ratio of the carrier elements (27) to the material-adhesive mixture are adjusted during the mixing such that the outer surface of the coating is at most 10%, preferably at most 5%, larger than the surface of the coated carrier element (27).

16. Use of an oxygen-generating unit (21) according to one of claims 6 to 8 for producing hydrogen peroxide and/or molecular oxygen dissolved in water, in particular wherein a device (1) for converting ammonia from an ammonia-containing aqueous liquid into molecular nitrogen and/or a bioreactor for converting organic residual and/or waste materials into an organic nutrient solution are supplied with hydrogen peroxide and/or with molecular oxygen dissolved in water.

## Revendications

1. Particule (25) photosensible présentant un élément support (27) auquel un matériau (29) est collé au moyen d'un adhésif (28), le matériau (29) contenant des molécules de colorant (30) photoactives.

2. Particule (25) photosensible selon la revendication précédente, **caractérisée en ce que** le matériau (29) comprend une substance (45, 46) organique non vivante, en particulier morte, en particulier dans laquelle le matériau (29) comprend un composant d'humus (45) et/ou un minéral (46) argileux.

3. Particule (25) photosensible selon l'une des revendications précédentes, **caractérisée en ce que** le matériau (29) présente des polymères de feuilles végétales et/ou **en ce que** les molécules de colorant (30) photoactives sont sensibles dans le spectre de la lumière solaire, de préférence dans la zone visible du spectre de la lumière solaire.

4. Particule (25) photosensible selon l'une des revendications précédentes, **caractérisée en ce que** l'élément support (27) a un diamètre maximal de 1 cm, de préférence compris entre 0,1 mm et 5 mm, et/ou **en ce que** l'élément support (27) est en une matière plastique, en particulier dans laquelle l'élément support (27) est une particule microplastique.

5. Particule (25) photosensible selon l'une des revendications précédentes, **caractérisée en ce que** l'adhésif (28) comprend un mucilage et/ou **en ce que** l'adhésif (28) enrobe l'élément support (27).

6. Unité (21) de génération d'oxygène comprenant une cellule (22) photoélectrique dans laquelle sont disposées une pluralité de particules (25) photosensibles selon l'une des revendications précédentes.

7. Unité (21) de génération d'oxygène selon la revendication précédente, **caractérisée en ce que** la cellule (22) photoélectrique présente un corps (23) creux avec une paroi (24) transmettant la lumière et/ou **en ce que** les particules (25) photosensibles sont en suspension dans un liquide (26) de cellule photoélectrique contenant de l'eau.

8. Unité (21) de génération d'oxygène selon la revendication précédente, **caractérisée en ce que** l'unité (21) de génération d'oxygène présente un circuit (53) de génération d'oxygène pour le liquide (26) de cellule photoélectrique, la cellule (22) photoélectrique étant intégrée dans le circuit (53) de génération d'oxygène, en particulier dans lequel l'unité (21) de génération d'oxygène présente un réservoir (44) raccordé au circuit (53) de génération d'oxygène, avec lequel réservoir du liquide (26) de cellule photoélectrique est amenable dans le circuit (53) de génération d'oxygène, et/ou dans lequel l'unité (21) de génération d'oxygène présente une sortie (62) raccordée au circuit (53) de génération d'oxygène, par laquelle le liquide (26) de cellule photoélectrique est évacuable.

9. Procédé de production d'une particule (25) photosensible selon l'une des revendications 1 à 5, dans lequel le matériau (29) contenant les molécules de colorant (3) photoactives est appliqué sur l'élément support (27) au moyen de l'adhésif (28).

10. Procédé selon la revendication de procédé précédente, **caractérisé en ce que** l'élément support (27) est fabriqué en broyant du macroplastique et/ou en utilisant comme adhésif (28) un mucilage qui est fabriqué en prélevant du mucilage humain, animal ou végétal ou en fabriquant le mucilage par voie chimique.

11. Procédé selon l'une des revendications de procédé précédentes, **caractérisé en ce que** le matériau (29) qui contient les molécules de colorant (30) photoactives est obtenu en isolant et/ou en mettant à disposition une substance organique non vivante, en particulier morte.

12. Procédé selon la revendication de procédé précédente, **caractérisé en ce que**, pour la mise à disposition de la substance, un matériau de feuille végétale contenant un polymère de feuille végétale est mis à disposition, en particulier dans lequel sa teneur en colorant végétal est d'au moins 1 % et/ou sa proportion en masse de lignine est supérieure à 1 % en substance sèche et/ou sa proportion en masse d'un produit de dégradation de la chlorophylle, catabolites de chlorophylle non fluorescents (NCC), est comprise entre 0,6 % et 1,2 % en substance sèche par rapport à la teneur totale du matériau de feuille végétale.

13. Procédé selon la revendication de procédé précédente, **caractérisé en ce que** le matériau de feuille végétale est séché, de préférence jusqu'à ce qu'une proportion en masse d'eau du matériau de feuille végétale d'au plus 25 % soit atteinte, en particulier dans lequel le matériau de feuille végétale séché est ensuite broyé, et/ou **en ce que** le matériau de feuille végétale est mélangé avec des minéraux argileux, en particulier dans lequel la proportion en masse du matériau de feuille végétale est comprise entre 60 % et 99 %, la proportion en masse des minéraux argileux est comprise entre 1 % et 20 % et la proportion en masse d'eau et/ou la proportion en masse d'un autre matériau est comprise entre 0 % et 20 %.

14. Procédé selon l'une des revendications de procédé précédentes, **caractérisé en ce que** le matériau (29) contenant les molécules de colorant (30) photoactives est mélangé avec l'adhésif (28) pour former un mélange matériau-adhésif, de préférence en ajoutant de l'eau, en particulier dans lequel le matériau a une proportion en masse comprise entre 80 % et 99 %, l'adhésif a une proportion en masse comprise entre 1 % et 10 % et l'eau a une proportion en masse comprise entre 0 % et 10 %.

15. Procédé selon la revendication de procédé précédente, **caractérisé en ce que** le mélange matériau-adhésif est mélangé avec les éléments supports (27) de sorte que les éléments supports (27) sont enrobés par l'adhésif (28), en particulier dans lequel la viscosité de l'adhésif (28) et/ou le rapport volumique des éléments supports (27) au mélange matériau-adhésif sont ajustés lors du mélange de sorte que la surface extérieure de l'enrobage est supérieure d'au plus 10 %, de préférence d'au plus 5 %, à la surface de l'élément support (27) enrobé.

16. Utilisation d'une unité (21) de génération d'oxygène selon l'une des revendications 6 à 8 pour la production de peroxyde d'hydrogène et/ou d'oxygène moléculaire dissous dans l'eau, en particulier dans laquelle un dispositif (1) pour la transformation d'ammoniac à partir d'un liquide aqueux contenant de l'ammoniac en azote moléculaire et/ou un bioréacteur pour la transformation de résidus et/ou déchets organiques en une solution nutritive organique sont alimentés en peroxyde d'hydrogène et/ou en oxygène moléculaire dissous dans l'eau.
